Europäisches Patentamt

**European Patent Office**

**Office européen des brevets**

(19)

(11) Publication number : **0 333 202 B1**

(12) **EUROPEAN PATENT SPECIFICATION**

(45) Date of publication of patent specification :
04.03.92 Bulletin 92/10

(51) Int. Cl.$^5$ : **F16B 5/02, F16B 17/00**

(21) Application number : **89104764.9**

(22) Date of filing : **17.03.89**

(54) **Blind fastener.**

(30) Priority : **17.03.88 US 169533**
**28.11.88 US 276840**

(43) Date of publication of application :
**20.09.89 Bulletin 89/38**

(45) Publication of the grant of the patent :
**04.03.92 Bulletin 92/10**

(84) Designated Contracting States :
**CH DE ES FR GB IT LI NL SE**

(56) References cited :
**EP-A- 0 154 817**
**DE-A- 3 242 009**
**DE-A- 3 446 186**
**US-A- 4 246 828**

(73) Proprietor : **THE B.F. GOODRICH COMPANY**
**3925 Embassy Parkway**
**Akron Ohio 44313-1799 (US)**

(72) Inventor : **Shackelford, James R.**
**225 Lincoln Avenue**
**Cuyahoga Falls Ohio 44221 (US)**
Inventor : **Betchel, Thomas S.**
**3230 S. Hametown Road**
**Norton Ohio 44203 (US)**
Inventor : **MacGregor, James D.**
**599 Meredith Lane**
**Cuyahoga Falls Ohio 44221 (US)**
Inventor : **Phillips, Ronald W. II**
**585 Manning Road**
**Mogadore Ohio 44260 (US)**

(74) Representative : **von Kreisler, Alek,**
**Dipl.-Chem. et al**
**Patentanwälte Von Kreisler-Selting-Werner,**
**Deichmannhaus am Hauptbahnhof**
**W-5000 Köln 1 (DE)**

EP 0 333 202 B1

## Description

This invention relates to blind fasteners and more particularly to a blind fastener of the type that can be installed entirely from one side of a structure and has an insert threaded portion that cooperates with the main body of the fastener to provide a floating action to compensate for misalignment of parts to be interconnected. Conventional blind fasteners have an internal screw thread that facilitates the upsetting action of a tubular body of the fastener, which upsetting action cooperates with the head of the fastener to secure the fastener in its position on the structure or plate members. It was important in these installations to locate the hole within the structure that receives the blind fastener precisely as any deviation from the intended installation hole would result in the need to provide either another hole for a second fastener or else adjust the product or member that was to be installed on the structure.

The precharacterizing part of claim 1 refers to a blind fastener as disclosed in US-A-2 553 236. The known fastener consists of a tubular body with four tabs extending axially away from said body and a nut element having a central threaded bore and slots to receive the tabs. The radially inwardly extending portions of the tabs retain the nut element together with the tubular body while permitting lateral movement of the nut element within the tubular body. The nut element with its short axial length contributes to false starts of the screw threads and the stripping thereof which renders the fastener useless as well as requiring the removal thereof.

It is the object of the present invention to provide a blind fastener which compensates misalignment of parts to be interconnected and which resists relative great axial forces.

This problem is solved, according to the invention, with the characterizing features of claim 1.

The present invention provides a new and improved means for compensating for misalignment by having a threaded sleeve that is loosely journaled within the lower portion of the tubular portion of the fastener, which tubular portion is upset thereby securely locking the fastener in position on the structure while providing versatility to the fastener. With the loosely fitting threaded sleeve, sufficient clearance is obtainable in all directions to compensate for any slight misalignment of the fastener body thus increasing efficiency and versatility.

In addition, locking threads are often used in the fastener elements in the aircraft industry whereas the threaded element of the present invention provides non-locking threads that act as a guide so that the male threaded element may be easily engaged in the lower locking threads. The present invention is less costly to manufacture and permits the use of different size sleeves which can be assembled at the place of use prior to installation. With these combination of elements there is provided a fastener that is smaller for a given thread size than heretofore possible. In addition, the fastener, particularly the threaded sleeve, is easy to manufacture using techniques well known in the art. The shear strength of the fastener may be increased by the use of a shoulder bolt or a spacer to fill the counterbore area.

These type of fasteners are particularly useful in the aircraft industry where lightweight blind type fasteners are necessary.

This invention in its preferred embodiment is a two piece element fastener that is assembled into an integral blind fastener of the type that has a head and a tubular body. The tubular body is adapted to be passed through a hole in a structure or plate member and is capable of being upset or reshaped for engagement with the blind surface of the structure. The tubular body has a central bore and an annular edge opposite the head. A sleeve with a smaller external diameter than the diameter of the central bore is secured to the lower portion of the tubular body and freely floats in the central bore, with a flanged portion on such sleeve to engage the annular edge of the tubular body. The sleeve has an upper internal threaded bore portion for receiving the draw rod for an upsetting action on the tubular body and for receiving a bolt to fasten a plate to the structure. The flanged portion on the sleeve is used to facilitate upsetting action on the tubular body.

Fig. 1 is an exploded isometric view of a blind fastener;

Fig. 2 is a side elevational view of the blind fastener as shown in Fig. 1 in cross section with a portion of the sleeve shown in full;

Fig. 3 is a side elevational cross sectional view of the fastener upset in a plate member or structure with a portion of the fastener broken away and showing a portion of a draw rod and anvil performing an upsetting action on the fastener;

Fig. 4 is a side elevational cross sectional view of the fastener secured to a structure with a bolt and product plate secured to the fastener;

Fig. 5 is an enlarged view of the bottom portion of the fastener taken on line 5-5 of Fig. 4;

Fig. 6 is a side elevational view of the fastener in an upset condition with a portion broken away and part in cross-section showing a spacer in the central bore of fastener.

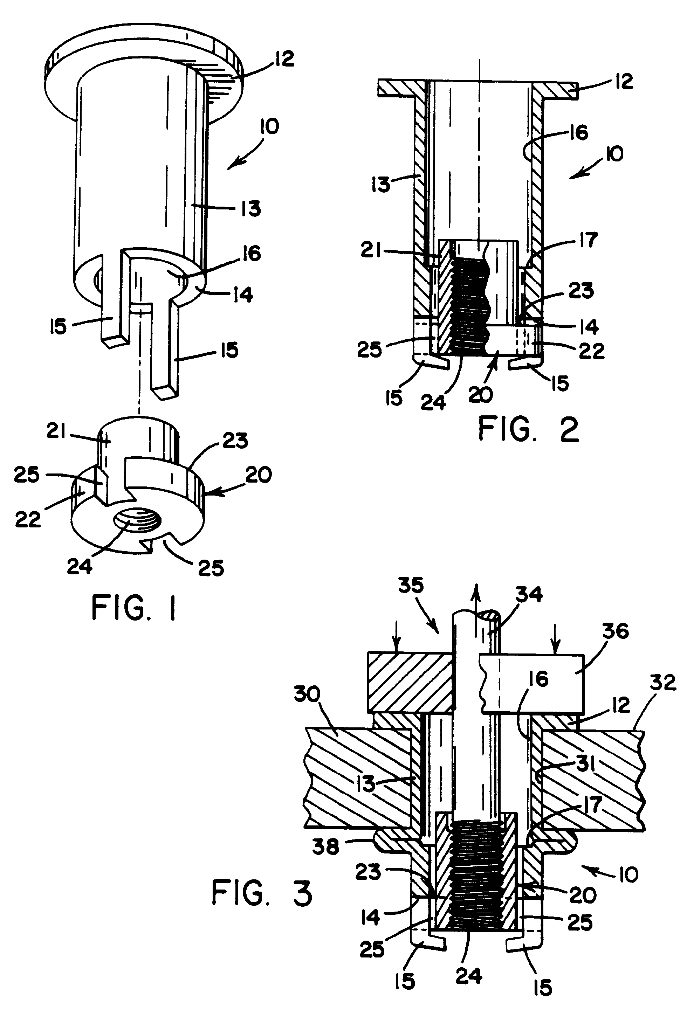

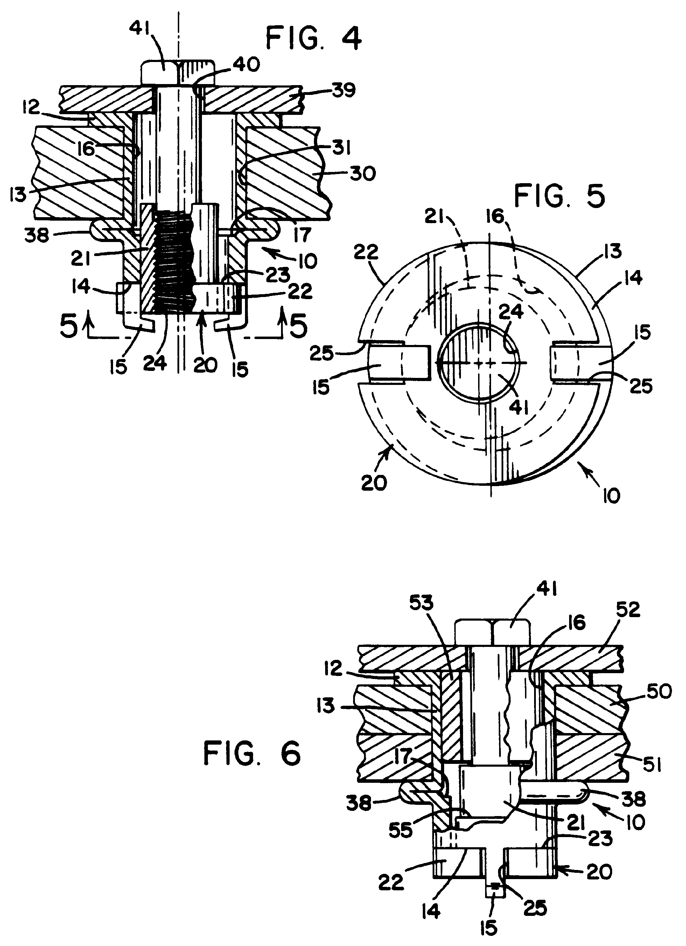

Referring to the drawings wherein like reference numerals designate like or corresponding parts throughout the several views, there is shown in Fig. 1 a fastener 10. It is to be noted that the fasteners illustrated in the drawings are considerably larger than the actual size of the fastener to more clearly describe the invention. The fastener 10 has a thin flat head 12 and a longitudinally extending tubular or hollow cylindrical body 13 that terminates into an annular edge 14 with two (2) downwardly projecting tabs 15 which are to be bent for a purpose to be described. As seen in Figs. 1 and 5, the tabs 15 are located diametrically opposite each other. Such tubular body 13 has a central bore 16. The upper and intermediate wall portion of tubular body 13 is thin walled in construction compared to the lower wall portion of tubular body 13 to facilitate an upsetting action to the thin walled portion. The junction of the thin walled portion with the thicker lower wall portion of tubular body 13 presents a shoulder 17 within central bore 16.

Loosely journaled in the central bore 16 of tubular body 13 is a longitudinally extending sleeve or insert 20 that has an upper (as viewed in Figs. 1 and 2) portion 21 and a larger diameter lower cylindrical portion or flanged portion 22. The juncture of the upper portion 21 with the lower portion 22 presents a shoulder 23. Sleeve 20 has a longitudinally extending central bore 24 that is threaded for substantially the full length thereof. The lower cylindrical portion 22 of sleeve 20 has a pair of slots or recesses 25 on opposite sides thereof, which slots 25, as seen in Fig. 1, are in vertical alignment with tabs 15. As the sleeve 20 is moved into the central bore 16 of tubular body 13, tabs 15 enter into slots 25 and sleeve 20 is continued to move upward into the central bore until shoulder 23 on lower portion 22 comes into abutting contact with annular edge 14. Thereafter the ends of the respective tabs 15 are bent inwardly toward each other to captively retain the sleeve 20 within the central bore 16 of tubular cylindrical body 13.

The upper portion 21 of sleeve 20 can be stepped slightly where the very upper section is of a slightly reduced diameter than the very lower section of upper portion 21 to permit greater tilting of the sleeve relative to the central bore 16. By making the upper portion of sleeve 20 longer, the operator is better able to center the bolt within the sleeve and properly thread such bolt into the threaded central bore 24. It is to be noted that the slots 25 extend into lower cylindrical portion 22 of sleeve 20 to present a surface substantially coextensive with the upper portion 21 as seen in Figs. 2 and 3.

As seen in Figs. 5 and 6, the width of tabs 15 is smaller than the width of slots 25 to provide sufficient clearance space to permit slight rotative movement of sleeve 20 relative to tubular body 13 to permit lateral movement therebetween. With the outside diameter of the upper portion 21 of sleeve 20 being substantially less than the inside diameter of the lower portion of central bore 16 of tubular body 13, sufficient clearance space is provided to permit the sleeve 20 to freely float in the central bore to compensate for misalignment of plates to be joined to the main support.

To attach the fastener 10 to a structure or plate member 30, a hole 31 is drilled therethrough as illustrated in Fig. 3. Such hole 31 may be countersunk to accommodate a tapered head of the fastener 10 if desired. Fastener 10 is inserted into the hole 31 with the flanged head 12 resting on the top surface 32 of structure 30 and the shank or tubular body of the fastener 10 projecting out of the hole 31. A draw rod 34 of an upsetting tool 35 is threadedly connected to the threaded portion of the fastener 10 as illustrated in Fig. 3. A non-rotatable annular anvil 36 is drawn down over the rod 34 and has its lower surface in engagement or bearing against the top surface of the flanged head 12. As the rod 34 is moved upwardly (as viewed in Fig. 3), pressure is maintained on the anvil 36 and the continued upward movement of rod 34 has the shoulder 23 or annular flange 22 of sleeve 20 exert pressure on tubular body 13 effecting a buckling of the thin walled portion of tubular body 13 designated 38. Such buckling of 38 is applied against the blind surface of structure 30 thereby firmly securing the fastener on structure 30 between such buckled portion 38 and the head 12 of fastener 10. Although plate structure 30 is illustrated as relatively thick, such thickness is relative and the fastener described can be applied to a thin walled structure.

Once blind fastener 10 is secured to the structure or plate member 30, a product or thin sheet metal member 39 may be secured to the structure 30 by laying such plate member 39 onto structure 31 and have its predrilled hole 40 in alignment with hole 31 in structure 30 and thence screw threading a bolt 41 into the threaded bore 24 in sleeve 20. As can be seen in Fig. 4, the clearance space between the sleeve 20 and the tubular body 13 allows for misalignment of holes 40 and 31 to compensate for slight misalignment of parts wherein the operator does not have access to the blind side of structure 30. As seen in Figs. 4 and 5, the clearance space between the sleeve 20 and the tubular body 13 has considerable latitude such that their respective longitudinal axes have sufficient off-set clearance.

Fig. 6 illustrates the interconnection of two plates 50 and 51 with a third plate 52 wherein any minor misalignment of plates can be compensated for by the floating action of bolt 41. In addition a sleeve 53 is shown as located within the central bore 16 of the tubular body 13 as a spacer and with a clearance space shown between tab 15 and the slot 25 in the lower portion of sleeve 20. The upper portion of the sleeve 20 is shown as stepped in construction, presenting a shoulder 55 which permits a thin walled sleeve of harder metal to engage such shoulder to deform slightly the ductile metal of the inner threaded bore 24 at such shoulder 55 to provide a non-locking thread thereat to act as a guide so that the male threaded element or bolt 41 may be easily engaged in the threads below such shoulder 55, which threads are the locking threads. The clearance space between the upper portion 21 of sleeve 20 can provide tilting thereof within the central bore to compensate for misalignment and facilitates the mating of the screw threads.

## Claims

1. A blind fastener comprising

a tubular body (13) having a flanged head (12) at one end and an annular surface (14) at the other end with a pair of tabs (15), said tubular body (13) having a portion thereof outwardly expansible by upsetting forces directed in an axial direction toward said annular surface (14) and said tubular body (13) having a central bore (16) extending therethrough, and

a connection element having a central threaded bore (24) and slots (25) for receiving said tabs (15) and said tabs (15) being of greater length than the length of said slots (25) to project radially inwardly to captively secure said connection element to said tubular body (13),

**characterized in that**

said connection element is a longitudinally extending sleeve (20) journaled in said tubular body (13), said sleeve having an upper portion (21) and a lower portion (22) with a shoulder (23) operative to abut said annular surface (14) to provide an upsetting force, said stats being provided in said lower portion, the internal diameter of said central bore (16) of said tubular body (13) being greater than the external diameter of said upper portion (21) to provide a clearance space permitting lateral movement of said upper portion (21) within said tubular body (13).

2. A blind fastener as set forth in claim 1 wherein said slots (25) in said lower portion (22) being of greater circumferential width than the circumferential width of said tabs (15) to provide circumferential clearance space therebetween to allow free floating play between said sleeve (20) and said tubular body (13).

3. A blind fastener as set forth in claim 1 or 2, wherein the uppermost section of said upper portion (21) of said sleeve (20) has a smaller outside diameter than the lowermost section of said upper portion (21) of said sleeve (20) to provide a greater limited lateral play and tilting between said sleeve (20) and said tubular body (13) of said fastener.

4. A blind fastener as set forth in claims 1 to 3, wherein said outwardly expansible portion of said tubular body (13) is a thinwalled portion along its length to facilitate the outward protrusion.

5. A blind fastener as set forth in claims 1 to 4, wherein said sleeve (20) has a circular cross-section.

## Patentansprüche

1. Blindbefestigungselement mit

einem rohrförmigen Körper (13), der an einem Ende einen mit einem Flansch versehenen Kopf (12) und am anderen Ende eine ringförmige Fläche (14) mit zwei Ansätzen (15) aufweist, wobei der rohrförmige Körper (13) einen durch in axialer Richtung zur ringförmigen Fläche (14) gerichtete Stauchkräfte nach außen ausdehnbaren Abschnitt und der rohrförmige Körper (13) eine sich durch diesen erstreckende Mittelbohrung (16) aufweist, und

einem Verbindungselement mit einer zentralen Gewindebohrung (24) und Schlitzen (25) zum Aufnehmen der Ansätze (15), wobei die Länge der Ansätze (15) größer ist als die Länge der Schlitze (25), so daß sie derart radial nach innen vorstehen, daß das Verbindungselement unverlierbar an dem rohrförmigen Körper (13) angebracht ist,

dadurch gekennzeichnet, daß

das Verbindungselement eine sich in Längsrichtung erstreckende Hülse (20) ist, die in dem rohrförmigen Körper (13) gelagert ist, wobei die Hülse einen oberen Abschnitt (21) und einen unteren Abschnitt (22) mit einer Schulter (23) aufweist, die zur Erzeugung einer Stauchkraft in Anlage an die ringförmige Fläche (14) bringbar ist, wobei die Schlitze im unteren Abschnitt vorgesehen sind, wobei der Innendurchmesser der Mittelbohrung (16) des rohrförmigen Körpers (13) größer ist als der Außendurchmesser des oberen Abschnitts (21), um einen Spielraum zu bilden, der ein seitliches Bewegen des oberen Abschnitts (21) in dem rohrförmigen Körper (13) ermöglicht.

2. Blindbefestigungselement nach Anspruch 1, bei dem die Umfangsbreite der Schlitze (25) im unteren Abschnitt (22) größer ist als die Umfangsbreite der Ansätze (15), um dazwischen in Umfangsrichtung einen Spielraum zu bilden, um ein freies Spiel zwischen der Hülse (20) und dem rohrförmigen Körper (13) zu ermöglichen.

3. Blindbefestigungselement nach Anspruch 1 oder 2, bei dem der oberste Bereich des oberen Abschnitts (21) der Hülse (20) einen Außendurchmesser aufweist, der geringer ist als derjenige des untersten Bereichs des oberen Abschnitts (21) der Hülse (20), um ein größeres begrenztes seitliches Spiel und Kippen zwischen der Hülse (20) und dem rohrförmigen Körper (13) des Befestigungselements zu ermöglichen.

4. Blindbefestigungselement nach einem der Ansprüche 1 bis 3, bei dem der nach außen ausdehnbare Abschnitt des rohrförmigen Körpers (13) entlang seiner Länge ein dünnwandiger Abschnitt ist, der das Vorstehen nach außen erleichtert.

5. Blindbefestigungselement nach einem der Ansprüche 1 bis 4, bei dem die Hülse (20) einen kreisförmigen Querschnitt aufweist.

## Revendications

1. Un élément de fixation aveugle comprenant

un corps tubulaire (13) muni d'une tête à collet (12) à une extrémité et d'une surface annulaire (14) à l'autre extrémité avec une paire de languettes (15), ledit corps tubulaire (13) comprenant une partie expansible vers l'extérieur sous l'effet des forces de refoulement dirigées dans une direction axiale vers ladite surface annulaire (14) et ledit corps tubulaire (13) comprenant un orifice central (16) le traversant, et

un élément de raccordement muni d'un orifice central fileté (24) et de fentes (25) pour recevoir lesdites languettes (15) et lesdites languettes (15) étant d'une longueur supérieure à la longueur desdites fentes (25) de manière à dépasser radialement vers l'intérieur pour fixer ledit élément de raccordement prisonnier audit corps tubulaire (13), caractérisé en ce que ledit élément de raccordement est un manchon s'étendant longitudinalement (20), tourillonnant dans ledit corps tubulaire (13), ledit manchon comprenant une partie supérieure (21) et une partie inférieure (22) munie d'un épaulement (23) prévu pour venir en butée sur ladite surface annulaire (14) de manière à développer une force de refoulement, lesdites fentes étant prévues dans ladite partie inférieure, le diamètre intérieur dudit orifice central (16) dudit corps tubulaire (13) étant supérieur au diamètre extérieur de ladite partie supérieure (21) pour créer un jeu permettant un déplacement latéral de ladite partie supérieure (21) dans ledit corps tubulaire (13).

2. Un élément de fixation aveugle selon la revendication 1, dans lequel lesdites fentes (25) de ladite partie inférieure (22) ont une largeur circonférentielle supérieure à la largeur circonférentielle desdites languettes (15) pour créer un espacement circonférentiel entre les deux afin de permettre un jeu à libre flottement entre ledit manchon (20) et ledit corps tubulaire (13).

3. Un élément de fixation aveugle selon la revendication 1 ou 2, dans lequel le diamètre extérieur de la section supérieure de ladite partie supérieure (21) dudit manchon (20) est inférieur à celui de la section inférieure de ladite partie supérieure (21) dudit manchon (20) pour fournir un jeu latéral limité plus important et une inclinaison entre ledit manchon (20) et ledit corps tubulaire (13) dudit élément de fixation.

4. Un élément de fixation aveugle selon les revendications 1 à 3, dans lequel ladite partie s'étendant vers l'extérieur dudit corps tubulaire (13) est une partie à paroi mince dans le sens de sa longueur pour faciliter la protubérance extérieure.

5. Un élément de fixation aveugle selon les revendications 1 à 4, dans lequel ledit manchon (20) est de section circulaire en coupe transversale.

FIG. 1

FIG. 2

FIG. 3

FIG. 4

FIG. 5

FIG. 6